# EUROPÄISCHE PATENTSCHRIFT

(11) **EP 2 499 353 B1**
(45) Veröffentlichungstag und Bekanntmachung des Hinweises auf die Patenterteilung: **03.08.2016**
(21) Anmeldenummer: 10771661.5
(22) Anmeldetag: 19.10.2010
(51) Int. Cl.: F03B 13/08, F03B 3/02

(54) **SCHACHTKRAFTWERK**
SHAFT POWER PLANT
CENTRALE ÉLECTRIQUE À PUITS

(30) Priorität: 09.11.2009 DE 102009052383
(43) Veröffentlichungstag der Anmeldung: 19.09.2012
(73) Patentinhaber: Technische Universität München, 80333 München (DE)
(72) Erfinder: RUTSCHMANN, Peter, 82031 Grünwald (DE); SEPP, Albert, 82418 Riegsee/Hagen (DE)
(74) Vertreter: Hoefer & Partner Patentanwälte mbB
(86) Internationale Anmeldenummer: PCT/EP2010/006391
(87) Internationale Veröffentlichungsnummer: WO 2011/054447

(56) Entgegenhaltungen:
- FR-A- 1 165 735
- FR-A- 1 165 736
- FR-A- 1 180 856
- FR-E- 69 884
- JP-A- 60 047 882

## Beschreibung

Die Erfindung betrifft ein Schachtkraftwerk sowie ein Schachtkraftwerksmodul zur Stromerzeugung durch Energieumwandlungen eines Abflusses zwischen Oberwasser und Unterwasser. Die Erfindung offenbart hierzu ein deutlich vereinfachtes Einlaufkonzept für Wasserkraftanlagen an Staubauwerken, wobei alle wichtigen wasserbaulichen Anforderungen an Hydraulik, Verlandungen, Geschiebetransport, Hochwassertauglichkeit sowie die erforderlichen ökologischen Komponenten berücksichtigt werden.

Durch den notwendigen Klimaschutz, die kontinuierlich steigenden Preise auf dem Energiesektor sowie weitere Umwelteffekte gibt es in Deutschland und auch weltweit erstmals ernsthafte politische Bekenntnisse zu nachhaltigen Energiekonzepten. Aufgrund der positiven Entwicklung im Ausbau der erneuerbaren Energien wird vom Bundesministerium für Umwelt (BMU) im Erfahrungsbericht 2007 zum EEG als neues Ausbauziel die regenerative Stromdeckung von mindestens 27 % bis zum Jahr 2020 und mindestens 45 % bis zum Jahr 2030 angestrebt. Der BMU Bericht bemängelte allerdings auch, dass der Ausbau der Wasserkraft bisher deutlich hinter den Erwartungen zurückblieb. Ursachen für die Stagnation im inländischen Wasserkraftausbau waren einerseits die fehlenden wirtschaftlichen Anreize und andererseits die hohen ökologischen Anforderungen mit langwierigen und teuren Genehmigungsverfahren. Zusätzlich war und ist das Risiko einer Antragsablehnung in Kauf zu nehmen, da häufig Bewertungen naturschutzdominant ohne objektive Abwägung getroffen werden.

Dass durch das BMU überhaupt eine weitere Steigerung der Stromerzeugung durch die bei Umweltverbänden kritisierte Wasserkraft angestrebt wird, kann wohl auch darin begründet sein, dass diese Stromgewinnung durch viele umweltrelevante Eigenschaften - hoher Erntefaktor, externe CO₂-Kosten, ständige Verfügbarkeit, relativ günstige Erzeugungskosten - wieder Wertschätzung gefunden hat, was seit Januar 2009 auch durch erhöhte Vergütungssätze honoriert wird.

In Deutschland wird ein weiterer Ausbau der Wasserkraft durch die Vorgaben im Leitfaden für die Vergütung von Strom aus Wasserkraft vom BMU sowie durch die Europäische Wasserrahmenrichtlinie geregelt, wobei im Grundsatz nur noch für Standorte mit bestehenden Querbauwerken und gleichzeitiger ökologischer Verbesserung Genehmigungsaussicht besteht.

In den sohlgestützten Flusslandschaften kann auf die Sicherung des Grundwasserstandes nicht verzichtet werden, so dass ein örtlicher Gefällesprung auch unter ökologischen und wirtschaftlichen Gesichtspunkten - Rampenbauwerke sind teuer, bei Hochwasserabfluss hydraulisch ineffizient und haben eine schlechte CO₂-Bilanz - erhalten bleiben muss. Die schlechte CO₂-Bilanz von Rampenbauwerken begründet sich im Abbau und LKW Transport riesiger Mengen von Hartgestein. Hierdurch sind wesentliche Voraussetzungen einer Wasserkraftnutzung gegeben. Bei gleichzeitiger Herstellung einer Durchgängigkeit müssen auch die Vorgaben nach dem Leitfaden EEG des BMU erfüllt sein. Der Bau größerer bzw. großer Anlagen in Deutschland bleibt dadurch beschränkt oder wird erschwert bzw. verhindert.

Durch die geschaffenen Rahmenbedingungen (EEG-Vergütung, definierte Auflagen) ist das Interesse an neuen Wasserkraftanlagen trotz mäßiger Standortbedingungen deutlich gestiegen. Die Praxis zeigt allerdings häufig, dass mit konventioneller Kraftwerkstechnik die Wirtschaftlichkeit trotz besserer Vergütung insbesondere mit abnehmender Fallhöhe kaum gewährleistet werden kann und möglicherweise wiederum eine Stagnation auftreten dürfte. Will man jedoch auch bei weniger günstigen Voraussetzungen wegen der überzeugenden umweltpositiven Eigenschaften mehr Strom aus Wasserkraft erzeugen, sind neue technische Komponenten mit ökologischer Ausrichtung zur effizienteren Nutzung erforderlich.

Der Nutzen, auf diesem Sektor neue, praxistaugliche Entwicklungen voranzubringen wird zusätzlich verstärkt, weil effizientere Wasserkraftkonzepte weltweit eingebaut werden können.

Die Kleinwasserkraft bietet für Schwellen- und Entwicklungsländer besondere Vorteile, weil beispielsweise bei geringen Fallhöhen nur einfache bauliche Anforderungen an das Staubauwerk gestellt werden, keine Stauhaltungsdämme erforderlich sind und nur marginale Änderungen im Fließgewässer vorgenommen werden müssen. Da in der Regel die Stromerzeugung aus Laufwasserkraftanlagen zumindest mit Teiltast weitgehend gewährleistet ist und gut prognostizierbar erfolgt, lässt sich eine wichtige Forderung zur Versorgungssicherheit auch bei dezentralen Siedlungsstrukturen im Inselbetrieb erfüllen.

Die Technik zur Stromerzeugung aus Wasserkraft ist bei größeren Anlagen im Grundsatz ausgereift, was durch die überaus hohen Gesamtwirkungsgrade von bis zu 90 % deutlich dokumentiert ist. Auch im Teillastbereich kann bei nahezu allen Turbinentypen eine hervorragende Umwandlung in elektrische Energie erfolgen.

Durch die Forderungen nach regenerativer Stromerzeugung wurden in den letzten Jahren auch auf dem Sektor der Klein- und Kleinstwasserkraft wieder verstärkt Forschungen durchgeführt. Neben Wirkungsgradsteigerungen und technologischen Verbesserungen bei Wasserrädern wurden auch einige neue Turbinentypen entwickelt, die teilweise die Belange des Fischabstieges und des Fischdurchganges berücksichtigen. Besonders erwähnenswert sind dabei die Techniken von Matrixturbinen und Wasserkraftschnecken. Beide Typen haben mittlerweile eine gewisse Marktreife erreicht.

Zusammenfassend kann man feststellen, dass in Nischensegmenten verbesserte Turbinentypen entwickelt wurden. Für die interessanten Standorte mit den definierten Randbedingungen nach dem Leitfaden BMU ist jedoch nicht der Turbinentyp maßgebend, sondern die Effizienz des gesamten Anlagenkonzeptes, bei dem die besonderen wasserbaulichen Bedingungen von festen, meist verlandeten Wehranlagen zu berücksichtigen sind. Eine wesentliche Forderung besteht zusätzlich in der stromauf- und stromabwärts zu schaffenden Durchgängigkeit, wobei eine Fischschädigung durch Turbinen vermieden werden sollte.

Eine Wasserkraftnutzung für die in Deutschland relevanten Standorte erfolgt meist in der klassischen Form eines Buchtenkraftwerkes mit großem baulichen Aufwand und z. T. erheblichen Ufereingriffen. Dürfen keine Wasserstandserhöhungen vorgenommen werden, entstehen aufgrund der geringen Fließtiefen äußerst ungünstige Voraussetzungen für die Kraftwerksanströmung, die nur durch Tieferlegung der Einläufe mit sowohl technischen, betrieblichen als auch wirtschaftlichen Nachteilen, eingeschränkt umgangen werden können.

Da eine fast vertikale, tief angeordnete Rechenebene vorgegeben ist, muss auch bei Geschiebeführung eine großflächige Sohleintiefung vorgenommen werden, damit hydraulische Mindestanforderungen für die Strömungsverhältnisse gewährleistet werden können. Hierfür sind im oberen Zuströmbereich Vorbecken zur Geschiebeablagerung und Spülschleusen zur Geschiebeweitergabe anzuordnen. Das Einlaufbauwerk muss so gestaltet und dimensioniert werden, dass der natürliche, breit angelegte Fließquerschnitt möglichst verlustarm in den kompakten Buchtenquerschnitt umgelenkt wird. Durchgeführte Betriebsanalysen zeigen, dass bei funktionsfähigen Buchtenkraftwerken etwa 2/3 der Kosten für den baulichen Anteil veranschlagt werden müssen.

Nachteile vorbekannter Buchtenkraftwerke im Überblick: großflächige Strömungsumlenkung, großflächiger Ufereingriff, großflächige Sohleintiefung, die durch eine Geschiebeschleuse gesichert werden muss, Geräuschimmissionen, zum Teil negative Optik durch Kraftwerksgebäude und ökologische Beeinträchtigung der ehemaligen Flusstrecke zwischen Ein- und Ausleitung mit schwer realisierbarem Fischabstieg. FR 1165736 A offenbart ein Schachtkraftwerk nach dem Oberbegriff des Anspruchs 1.

Es ist Aufgabe der Erfindung ein Wasserkraftwerk bereitzustellen, das bei kostengünstiger Herstellung naturverträglich und effizient betrieben werden kann.

Die Aufgabe wird gelöst durch die Merkmale der unabhängigen Ansprüche. Die Unteransprüche haben vorteilhafte Weiterbildungen zum Gegenstand.

Um Effizienzsteigerungen erfüllen zu können ist eine grundlegende Änderung des Anlagenkonzeptes erforderlich. Die nachfolgend dargestellte Erfindung beinhaltet im Wesentlichen eine Änderung von der vertikalen zur horizontalen Einlaufebene mittels eines vertikalen Schachtes, woraus sich erhebliche hydraulische, ökologische und wirtschaftliche Vorteile ableiten lassen. Die Erfindung beinhaltet ein Unterwasser-Wasserkraftkonzept bevorzugt an Staubauwerken. Wobei unter Staubauwerken insbesondere Flusssperren, Talsperren, Wildbachsperren, Staumauern, Wehranlagen, historische sowie denkmalgeschützte Wehranlagen, Querbauwerke, Schifffahrtsschleusen, staugeregelte Anlagen und/oder Stauhaltungen an fließenden oder stehenden Gewässern zu verstehen sind. Ferner umfasst hier der Begriff Staubauwerk eine natürliche Barriere zwischen einem Oberwasser und einem Unterwasser. Alle wichtigen wasserbaulichen Anforderungen an Hydraulik, Verlandungen, Geschiebetransport, Hochwassertauglichkeit sowie die erforderlichen ökologischen Komponenten werden erfindungsgemäß berücksichtigt.

Somit wird die Erfindung gelöst durch ein Schachtkraftwerk zur Stromerzeugung durch Energieumwandlung eines Abflusses zwischen Oberwasser und Unterwasser, umfassend einen vertikalen Schacht, dessen Schachtkrone eine sohlparallele Einlaufebene bildet, welche unterhalb des Wasserstandes des Oberwassers verläuft, wobei der Schacht nach oben offen ist und an seinem unteren Ende mit einem Boden verschlossen ist, eine Einheit aus einer Turbine und einer elektrischen Maschine, wobei die Einheit komplett unter Wasser im Schacht angeordnet ist, und wobei die Turbine zum horizontalen Wasserdurchlauf angeordnet ist, und einen an die Turbine angeschlossenen Ablauf, welcher einen geschlossenen Strömungskanal darstellt und durch einen Durchlass im Schacht zum Unterwasser führt, wobei eine horizontale erste Querschnittsfläche des Schachts wesentlich größer ist als eine durch das Turbinenlaufrad beanspruchte, vertikale zweite Querschnittsfläche.

Bevorzugt ist die komplette Einheit mit allen Seiten mit Wasser in Kontakt, sodass eine ausreichende Kühlung gewährleistet ist.

Bevorzugt kann die Turbine auch schräg angeordnet werden, d. h., die Turbinenachse weist einen beliebigen Winkel zwischen der Horizontalen und der Vertikalen auf. Bevorzugt wird eine Abweichung des Winkels der Turbinenachse gegenüber der Horizontalen bis +/- 40°, insbesondere bis +/- 25°, insbesondere bis +/- 15°, als Anordnung mit "horizontalem Wasserdurchlauf" definiert. Ferner bevorzugt wird eine Abweichung des Winkels der Turbinenachse gegenüber der Vertikalen bis +/- 40°, insbesondere bis +/- 25°, insbesondere bis +/- 15°, als Anordnung mit "vertikalem Wasserdurchlauf" definiert.

Die Anordnung mit horizontalem Wasserdurchlauf eignet sich insbesondere für sehr geringe Fallhöhen. Wobei hier durchaus bevorzugt ein Wasserstand des Unterwassers auf Höhe der Oberwassersohlebene liegen kann. Ferner kann bei kleinen Fallhöhen Bautiefe gespart werden was erhebliche Kostenvorteile bringt.

Bevorzugt ist die erste Querschnittsfläche auf Höhe einer Turbinenachse der Turbine oder auf Höhe der Schachtkrone definiert ist. Liegt die erste Querschnittsfläche auf Höhe der Turbinenachse, wird sie unter Vernachlässigung der Einheit aus Turbine und elektrischer Maschine gemessen. Liegt die erste Querschnittsfläche auf Höhe der Schachtkrone, wird sie unter Vernachlässigung etwaiger Rechenanordnungen gemessen. D.h., die erste Querschnittsfläche ist z.B. bei einem rechteckigen Schacht das Produkt aus den zwei lichten Seitenlängen des Schachts, wobei bei vertikalen Schachtwänden die erste Querschnittsfläche an der Turbinenachse und an der Schachtkrone gleich ist. Die zweite Querschnittsfläche entspricht einem Strömungsquerschnitt im Turbinenkanal und wird z.B. durch das Produkt aus halbem Turbinenlaufraddurchmesser im Quadrat und Pi angegeben. In bevorzugter Ausgestaltung ist vorgesehen, dass die erste Querschnittsfläche um zumindest Faktor 1,5, insbesondere 5, insbesondere 10, insbesondere 30 größer ist als die zweite Querschnittsfläche.

Die Definition "sohlparallele Einlaufebene" beinhaltet auch eine leicht, Insbesondere bis +/- 40 °, insbesondere bis +/- 20°, insbesondere bis +/- 10°, insbesondere bis +/-5°, gegen die Sohlebene geneigte Einlaufebene. Insbesondere bei Wildbachsperren kann die Sohlebene von der Horizontalen abweichen. Bei Wildbächen empfiehlt sich insbesondere die negative Neigung, insbesondere bis zu -40°. Bei der negativen Neigung wird die Einlaufebene in Richtung Unterwasser geneigt.

Die Einheit ist charakterisiert durch eine kompakte Bauweise, bevorzugt mit einem Permanentmagnet-Synchrongenerator mit variabler Drehzahl und/oder einer direkten Kopplung von Turbine und elektrischer Maschine und/oder einem nahezu wartungsfreien Unterwasserbetrieb. Bedingt durch diese Eigenheiten entfällt ein Krafthausgebäude und lediglich die Elektronik muss in einem Container oder Gebäude außerhalb des Wassers aufgestellt werden. Durch die spezifische Bauweise der horizontal durchströmten Turbine kann eine grundlegende Änderung der Einlaufebene und Rechenebene vorgenommen werden.

Das erfindungsgemäße Schachtkraftwerk ermöglicht kostengünstigere Wasserkraftnutzung an Fließgewässern mit Querbauwerken zur Erzeugung unterschiedlicher Energieniveaus im Wasserkörper. Typische Beispiele solcher Einsatzorte sind u.a. bestehende Querbauwerke und historische Wehre. Das Konzept kann ferner auch an anderen Orten zum Einsatz gelangen, z.B. bei Wildbachsperren oder bei verlandeten oder verlandungsgefährdeten Mitteldruckanlagen aber auch in Stauseen und Staubecken.

Das Potential an solchen Standorten ist auch in Deutschland vorhanden und kann wegen der optischen Vorteile und der geringen Baukosten wirtschaftlich umgesetzt werden. Infolge der einfachen Anordnung, der Robustheit und geringen Wartungsanfälligkeit, des relativ geringen Bauaufwandes und der Möglichkeit, in Modulbauweise mit vorgefertigten Elementen zu arbeiten, ist ein Einsatz außerhalb Deutschlands und Europas, weltweit insbesondere auch in Entwicklungsländern, möglich.

Mit dem Konzept des Schachteinlaufes lässt sich aufgrund der Horizontalanordnung der häufig geforderte Quotient Q_{Turbine}/A_{Rechenfläche} < 0,5 m/s deutlich einfacher und kostengünstiger realisieren, weil der Schachtquerschnitt nur zweidimensional vergrößert werden muss und außerdem keine Uferflächen beansprucht werden. Vorbekannte Buchtenkraftwerke erreichen oft nur Q/A = 1m/s. Q ist der Abfluss in der Turbine in m³/s. A bezeichnet die Schachtquerschnittsfläche in der Rechenebene. Die Schachtquerschnittsfläche in der Rechenebene muss zur Beachtung des Fischschutzes so groß gewählt werden, dass die Fische die Barriere wahrnehmen und reagieren können sowie aufgrund ihres Leistungsvermögens entfliehen können und ihre physischen Fähigkeiten zum Entkommen nicht überstiegen werden, d.h. im Extremfall ist Q_{Turbine}/A_{Rechenfläche} < 0,3 m/s zu bevorzugen.

Weiter bevorzugt ist es, dass die Schachtkrone bzw. die Einlaufebene in der unteren Hälfte, insbesondere im unteren Drittel, einer Wassertiefe des Oberwasser verläuft.

Vorteilhafterweise ist der Schacht über seine komplette Oberseite, mit Ausnahme von etwaigen Rechen, offen. Ferner von Vorteil ist, dass alle Seitenwände des Schachts vertikal verlaufen, so dass die erste Querschnittsfläche über die gesamte Schachthöhe konstant ist. Dadurch wird jede Einengung der Anströmung verhindert und der Schacht kann sehr einfach hergestellt werden. Der Begriff "vertikale" Seitenwände beinhalten auch eine leichte, insbesondere bis +/- 30°, insbesondere bis +/-10°, insbesondere bis +/- 5°, Neigung gegen den Schachtboden. Ferner bevorzugt ist es, den Schacht mit strömungsgünstig verlaufenden Leitwänden auszugestalten.

In bevorzugter Ausgestaltung ist die Turbine, insbesondere das Turbinenlaufrad, unterhalb der Sohlebene des Oberwassers angeordnet und/oder in der unteren Hälfte, insbesondere im unteren Drittel, des Schachts angeordnet. Turbine und elektrische Maschine sind bevorzugt klar unterhalb der Schachtkrone angeordnet. Bei Hochwasserführung kann Geschiebe in den Schacht eindringen, durch die gelegte Klappe wird das Geschiebe über dem Schacht gespült, d.h. die Höhe des Schachts in Bezug auf die Flusssohle bzw. die Lage des Turbinenrades unterhalb der Geschiebe rückhaltenden Einlaufkante sind wichtig.

Von Vorteil ist, dass die Turbinenachse (Rotationsachse) des Turbinenlaufrades und eine Ankerachse der elektrischen Maschine koaxial zueinander und horizontal angeordnet sind. Des Weiteren ist bevorzugt vorgesehen, dass sich der Ablauf direkt im Anschluss an die Turbine, insbesondere stetig, aufweitet. Besonders bevorzugt ist, dass der Ablauf nach der Turbine in folgender Reihenfolge einen sich aufweitenden Konus und ein Saugrohr oder einen Saugschlauch umfasst.

Das Saugrohr bzw. der Saugschlauch sind bevorzugt als Diffusor zur Rückgewinn der Geschwindigkeitsenergie ausgebildet

Bevorzugt ist der Boden des Schachts unterhalb der Sohlebene des Oberwassers angeordnet. Der Schacht erstreckt sich somit bis unterhalb der Sohlebene des Oberwassers.

Bevorzugt erstreckt sich der Ablauf durch eine Seitenwand des Schachts hindurch zum Unterwasser. Die Einheit ist bevorzugt direkt an die Schachtwand montiert.

In weiterer vorteilhafter Ausgestaltung wird der Einlauf in den Schacht mit einer horizontalen Rechenebene, welche der horizontalen Einlaufebene entspricht, oder einer vertikalen Rechenebene mit insbesondere einer horizontalen Abdeckung über dem Schacht versehen. Bevorzugt werden ein vorgelagerter Grobrechen und ein nachgelagerter Feinrechen verwendet. Der Feinrechen ist bevorzugt mit einem Gitterabstand < 20 mm ausgeführt. Bevorzugt haben beide Rechen drehbare Rechenstäbe und/oder eine maschinelle Abdeckung, z.B. Rollabdeckung, sowie eine Rechenreinigungsvorrichtung unter Wasser.

Bevorzugt umfasst das Schachtkraftwerk ein Staubauwerk zwischen Oberwasser und Unterwasser. Wobei unter Staubauwerken insbesondere Flusssperren, Talsperren, Wildbachsperren, Staumauern, Wehranlagen, historische sowie denkmalgeschützte Wehranlagen, Querbauwerke, Schifffahrtsschleusen, staugeregelte Anlagen und/oder Stauhaltungen an fließenden oder stehenden Gewässern zu verstehen sind. Ferner umfasst hier der Begriff Staubauwerk eine natürliche Barriere zwischen einem Oberwasser und einem Unterwasser.

Bevorzugt ist im Staubauwerk, insbesondere über die gesamte Einlaufbreite, eine permanent überströmte Klappe angeordnet. Bevorzugt ist der Schacht mit einem vieleckförmigen oder halbkreisförmigen Querschnitt ausgebildet, wobei eine Längsseite direkt am Staubauwerk anliegt. Ferner bevorzugt ist die Klappe zum Erweitern der Überströmung und zum gleichzeitigen Öffnen einer Unterströmung um eine horizontale Achse schwenkbar. Alternativ zur schwenkbaren Klappe ist eine Drehklappe bevorzugt, wobei die Drehklappe an ihrer Unterkante einen integrierten Verschluss umfasst, welcher eine Regulierung der Unterströmung unabhängig von der Überströmung zulässt.

Der Oberwasserstand wird bis zum Turbinenausbauabfluss durch die Schaufelstellung des bevorzugten Leitapparates und der Turbinenlaufraddrehzahl reguliert. Durch die kompakte Bauwerksform mit der erzwungenen Vertikalumlenkung des Triebwassers entsteht beim Übergang vom Freispiegel- zum Druckabfluss eine ausgeprägte Wirbelbildung. Wie der Versuch am physikalischen Modell zeigte, unterbindet bereits eine relativ geringe, breitflächige Klappenüberströmung eine Rotationsströmung mit lufteinziehender Wirbelbildung.

Durch die stirnseitig angeordnete Klappe werden vier wesentliche Effekte erzielt: Unterbindung der Wirbelbildung im Einlauf durch Permanentüberströmung mit gleichzeitiger Sauerstoffregulierung. Wobei sowohl Sauerstoffeintrag als auch Sauerstoffaustrag bei Übersättigung reguliert werden kann. Breitflächige und direkte Oberflächenabströmung ins Unterwasser. Aale, die sich bodennah bewegen und nur an wenigen Tagen im Herbst abwärts wandern, könnten durch temporäres Öffnen des integrierten sohlbündigen Reinigungsverschlusses bzw. bei Einbau einer Schwenkklappe durch eine Drehstellung schadlos ins Unterwasser befördert werden. Abführung von Treibholz und Geschwemmsel über die Klappe sowie Abführung des Rechengutes unter der Klappe. Sowie gegebenenfalls Steuerung des Oberwasserstandes.

Durch die Permanentüberströmung der Klappe entwickelt sich im gesamten Einlaufbereich eine oberflächennahe Fließlamelle wodurch besonders abwanderungswillige Fische, insbesondere Jungfische deren Lebensraum vorwiegend an der Oberfläche ist, schadlos absteigen können.

Um die bevorzugten Anforderungen zu erfüllen, muss eine Drehklappe mit einem tief liegenden integrierten Verschluss ausgestattet werden. Die alternative Schwenkklappe hat eine mittig angeordnete Drehachse, wodurch eine Drehbewegung im Uhrzeigersinn gleichzeitig die Unter- bzw. Überströmung gewährleistet bzw. erhöht. Um bei Hochwasserabführung den vollen Flächenquerschnitt freigeben zu können und keine Verklausungsgefahr zu provozieren, wird bevorzugt eine Technik verwendet die eine Entkoppelung der mittigen Drehachse und ein Einkoppeln einer Achse am Klappenfußpunkt ermöglicht.

Bevorzugt ist eine Unterkante der Klappe auf Höhe der Schachtkrone angeordnet.

Alternativ dazu ist es von Vorteil, dass um den Schacht eine tiefer als die Schachtkrone und tiefer als die Sohlebene des Oberwassers liegende Spülrinne verläuft, wobei die Spülrinne bis zur Klappe führt und die Unterkante der Klappe auf Höhe der Spülrinne angeordnet ist. Die Klappe ist bevorzugt mit einer Reguliervorrichtung versehen, die geeignet ist, einen geschiebeaustragenden Spülschwall zu erzeugen.

Geschiebeführung erfolgt bei größeren Wasserführungen wobei sehr häufig bei festen Wehranlagen eine völlige Verlandung bis zur Wehrkrone eintreten kann. Durch die relativ geringe Überdeckung ist das erfindungsgemäße Klappenspülsystem wirksam. Bei konventionellen Anlagen benötigt man wegen der Tiefenentwicklung aufwändige und großflächige Spülbauwerke. Durch den Feinrechen wird Grobgeschiebeeintrag verhindert, Sande sind für die Turbine im Niederdruckbereich praktisch unschädlich.

Geschiebetransport und Treibholzanfall erfolgt normalerweise bei Hochwasserführung. Um entsprechende Maschinen- und Bauwerksschäden zu vermeiden, können die Rechenstäbe bevorzugt drehbar ausgestattet werden (Nutzung als Verschlussebene) um Geschiebe- und Schwimmstoffeintrag in den Schacht zu verhindern. Zugleich wird bei höherer Wasserführung der Klappenverschluss mit dem Effekt gelegt, dass sich über der Rechenebene eine Absenkungskurve bildet und dadurch ausreichend große Schleppkräfte erzeugt werden, um den Einlaufbereich geschiebefrei zu halten. Die Schacht- und Klappendimensionierung ist für die geforderte vollflächige Spülwirkung vorzunehmen.

Bei konventionellen Einlaufen können stromabwärts wandernde Fische bei hohen Fließgeschwindigkeiten an den Einlaufrechen gedrückt werden oder geraten in die Turbinen von Wasserkraftanlagen und sind dadurch verletzungsgefährdet. Mit den bisher realisierten, technischen Abhilfemaßnahmen konnten allenfalls Teilerfolge erzielt werden. So sind Bypass-Systeme für den Fischabstieg oft wirkungslos und konstruktive Turbinenlösungen (Laufradgeometrie, Drehzahl) mit deutlichen Wirkungsgradeinbußen verbunden, wobei die Frage der tatsächlichen Schädigungsreduktion offen bleibt. Erfindungsgemäß ist ein deutlicher Schädigungsrückgang im Fischbestand möglich durch Schaffung sicherer Abwanderungskorridore in das Unterwasser und Absenkung der Anströmgeschwindigkeiten in der Rechenebene auf bevorzugt vₘ < 0,5 m/s. Um alleine die Forderungen nach niedrigen Anströmgeschwindigkeiten zu erfüllen, müssten bei konventionellen Kraftwerkseinläufen mit vertikaler Ebene die Bauwerke erheblich vergrößert werden, da die bisherigen Bemessungen mit vₘ Rechen ≤ 1,0 m/s vorgenommen wurden.

Mit dem Konzept des erfindungsgemäßen Schachteinlaufes lässt sich aufgrund der Horizontalanordnung die geforderte große Rechenfläche mit moderaten Fließgeschwindigkeiten ohne aufwändige Rampenbauwerke erzeugen. Die zweite Forderung nach funktionsfähigen Abwanderungskorridoren bleibt bei klassischen Kraftwerksanlagen weitgehend unerfüllt. Mit dem erfindungsgemäßen Schachtkonzept bietet sich aufgrund der Klappenanordnung mit der hydraulisch notwendigen Permanentüberströmung die Möglichkeit, durch bevorzugte dreiecks- oder halbkreisförmige Einkerbung im Kronenbereich der Klappe die direkte Abströmung so zu ertüchtigen, dass sie von abwanderungswilligen Fischen benutzt wird. Aale, die sich bodennah bewegen und nur an wenigen Tagen im Herbst abwärts wandern, könnten durch temporäres Öffnen des integrierten sohlbündigen Reinigungsverschlusses an der Unterkante der Klappe schadlos ins Unterwasser befördert werden. Die vorgeschlagenen Fischabstiegstechniken sind deshalb erfolgversprechend, weil neben den geringen Fließgeschwindigkeiten in der Feinrechenebene ein kurzer und direkter Weg zur breitflächigen Klappenüber- bzw. -Unterströmung vorhanden ist. Es ist sowohl ein kontinuierlicher als auch ein (sensor-)gesteuerter Betrieb bevorzugt, bei dem die Zeiträume des Fischabstieges besonders berücksichtigt werden könnten.

Durch die bevorzugte direkte Positionierung des erfindungsgemäßen Schachtes am Wehrkörper bzw. Staubauwerk sowie der vollständigen Unterwasserwasseranordnung werden weitere positive Effekte erzielt: Vollständig unsichtbare Kraftwerksbauten, Beibehaltung des Wasserweges im Flussbett ohne gravierende Strömungsumlenkungen und Beeinträchtigung der Öko-Fauna und Öko-Flora, keine Totzonenbildung im Unterwasser, und Vermeidung von Geräuschimmissionen durch die komplette Unterwasseranordnung.

Ferner bevorzugt sind verstellbare Rechenstäbe als Verschlusseinrichtung und/oder andere motorisierte Abdeckungen und/oder Unterwasserrechenreiniger und/oder ein für die Weitergabe des Rechengutes notwendiger integrierte Verschlussteil an der Unterkante in der Klappe.

Alternativ zur versenkten Anordnung des Schachtes in der Sohle ist bevorzugt vorgesehen, dass der Boden des Schachts oberhalb der Sohlebene des Oberwassers angeordnet ist. Bevorzugt ist der Schacht hierzu gegen die Sohle abgestützt und/oder am Staubauwerk befestigt, insbesondere eingehängt, und/oder stehend auf einem Fortsatz des Staubauwerks angeordnet. Besonders bevorzugt umfasst der Ablauf einen zylindrischen Durchlauf mit konstantem Querschnitt, insbesondere ausgeführt als Bohrung, durch das Staubauwerk. An den zylindrischen Anteil schließt sich bevorzugt eine Querschnittsaufweitung, insbesondere ein Diffusor, als Übergang zum Unterwasser an.

Diese Variante kommt bevorzugt bei Mitteldruckanlagen oder bei klassischen Talsperren zum Einsatz. Je nach Talsperrenhöhe und Verlandungsszenario wird die Schachthöhe am Staubauwerk gewählt. Die Energierückgewinnung im Diffusor erfolgt bevorzugt erst luftseitig.

Alternativ zum direkten anbringen des Schachts am Staubauwerk wird der Schacht am Ufer aufgestellt oder direkt in den Fels gebohrt bzw. im Fels errichtet. Hierbei kann eine bestehende Bauumleitung modifiziert als Verbindung zum Unterwasser genutzt werden. Der Schacht ist bevorzugt als zylindrische Bohrung, insbesondere im Fels, ausgebildet. Bei stabilem Fels bilden die Wände des Bohrloches, also das Gestein selbst, direkt die Schachtwandung. Alternativ kann der Schacht in das Bohrloch eingesetzt werden oder im Bohrloch betoniert werden. Ferner ist vorteilhafterweise ein Zulauf aus dem Oberwasser in den Schacht bzw. in das Bohrloch mittels einer Beileitung vorgesehen. Zwei Varianten eines Schachts im Fels sind bevorzugt. In der ersten Variante wird der Seeinhalt (Oberwasser) über einen Schacht im Fels ins Unterwasser abturbiniert. In der zweiten Variante werden Beileitungen in den See abturbiniert. Beileitungen führen das Wasser im Freispiegelabfluss aus einem anderen Tal in einen Speicher. D.h. dass es immer eine Spiegeldifferenz zwischen ankommendem Freispiegelabfluss und Wasserstand im Speicher gibt. Diese Differenz, die sich mit Füllen des Speichers verringert, kann bevorzugt energetisch genutzt werden. In vor bekannten Methoden wird diese Differenz nicht genutzt und das Wasser springt über den Felsen ins Staubecken:

Die Vorteile des erfindungsgemäßen Schachtkraftwerks im Überblick: Marginale Strömungsumlenkung durch bevorzugte Modulbauweise und bevorzugte Mehrfachanordhung mehrerer Schachtkraftwerke an einem Staubauwerk, Turbinen im und am Wehr integrierbar ohne gravierende Strömungsumlenkung, Schachteinlauf mit horizontaler Rechenebene, geringe Sohleintiefung durch stirnseitige Klappenspülung, keine baulichen Ufereingriffe, keine Geräuschimmissionen, keine Generatorkühlung nötig, keine sichtbaren Kraftwerksbauten, Fischabstieg über ständig beaufschlagte Spülklappe möglich.

Die Erfindung umfasst des Weiteren ein Schachtkraftwerksmodul zur Stromerzeugung durch Energieumwandlung eines Abflusses zwischen Oberwasser und Unterwasser, umfassend ein vertikales Schachtmodul, dessen Schachtkrone eine sohlparallele Einlaufebene bildet, welche dazu ausgebildet ist, um unterhalb des Wasserstands des Oberwassers zu verlaufen, wobei das Schachtmodul nach oben offen ist und an seinem unteren Ende mit einem Boden verschlossen ist, ein Einheitenmodul aus einer Turbine und einer elektrischen Maschine, wobei das Einheitenmodul zur Anordnung komplett unter Wasser im Schachtmodul ausgebildet ist, und wobei die Turbine zur Anordnung mit horizontalem Wasserdurchlauf ausgebildet ist, und ein an die Turbine anzuschließendes Ablaufmodul, welches einen geschlossenen Strömungskanal darstellt und dazu ausgebildet ist, um durch einen Durchlass im Schachtmodul zum Unterwasser zu führen, wobei in eine horizontale erste Querschnittsfläche des Schachtmoduls wesentlich größer ist als eine durch das Turbinenlaufrad beanspruchte, vertikale zweite Querschnittsfläche.

Die vorteilhaften Ausgestaltungen, wie sie in Verbindung mit dem erfindungsgemäßen Schachtkraftwerk diskutiert wurden, finden entsprechend bevorzugte Anwendung auf das erfindungsgemäße Schachtkraftwerksmodul. Das eigenständige Schachtmodul, das auch unabhängig von einem Staubauwerk aufgestellt werden kann, besteht aus einem durchströmten Schacht mit vertikaler einlaufebene und einer Turbine mit elektrischer Maschine, die permanent unter Wasser angeordnet sind. Das Schachtmodul kann bevorzugt in einem natürlich oder künstlich aufgestauten Wasserkörper frei oder angebaut an funktional andersartige (Wasser-)Bauten aufgestellt werden. Das Schachtmodul integriert bevorzugt eine horizontale Rechenebene mit Reinigung. Wirbel müssen mittels hydraulischer Maßnahmen verhindert werden. Die modulare Bauweise erlaubt eine Aufstellung des Schachtkraftwerks örtlich losgelöst (z.B. vorgelagert) von einem zu errichtenden Sperrenbauwerk, einer schon bestehenden Sperre oder in einem bestehenden Wasserspeicher. Eine hydraulische Verbindung zwischen Ober- und Unterwasser muss in jedem Fall gewährleistet werden.

Das erfindungsgemäße Schachtkraftwerk bzw. Schachtkraftwerksmodul umfasst bevorzugt einen Schacht mit einfachem Querschnitt, insbesondere rechteckig oder kreis- oder halbkreisförmig, mit vertikalen oder annähernd vertikalen Wänden. Auf alle Fälle wird bevorzugt die übliche, strömungsgünstige Verengung gegen die Turbine vermieden und somit eine kostengünstige Schachtgeometrie gewählt. Zur Strömungslenkung können bevorzugt einfache Leitelemente oder ein optimierter Leitapparat der hydraulischen Maschine zur Anwendung kommen. Bevorzugt sind strömungsgünstig geformte Leitelemente, insbesondere spiralförmig verlaufende Leitelemente, im Schacht angeordnet. Der Querschnitt des Schachts ist bevorzugt viel größer als derjenige, der durch das Turbinenlaufrad beansprucht wird. In vorbekannten Vorrichtungen werden die unterschiedlichen Querschnitte durch eine komplexe, gekrümmte Schalung angeglichen, um Verluste gering zu halten. Demgegenüber wird hier bevorzugt eine hydraulisch ungünstige Geometrie gewählt, wobei der ungünstige Strömungsverlauf durch eine große Querschnittsfläche und eventuell durch Leitelemente und/oder Leitapparat wett gemacht wird. Die Geschwindigkeiten sind wegen der großen Querschnittsfläche gering und entsprechend auch die hydraulischen Verluste.

Bevorzugt wird bei vorgeschlagenem Kraftwerk weder ein Luftraum, eine Zutrittsmöglichkeit noch eine seitliche Verbindung in Form einer klassischen, begehbaren Kraftwerkszentrale verwendet. In vorbekannten Vorrichtungen sind die Turbinen in einem trockenen, zusammenhängenden Raum aufgestellt, und zwar nebeneinander, d.h. eine Turbine pro Einlauf. Erfindungsgemäß gibt es keine solche Querverbindung.

Im Folgenden wir die Erfindung anhand von Ausführungsbeispielen genauer erläutert. Dabei zeigt:
- Fig. 1: einen Schnitt durch ein erfindungsgemäßes Schachtkraftwerk nach einem ersten Ausführungsbeispiel,
- Fig. 2: einen weiteren Schnitt durch das erfindungsgemäße Schachtkraftwerk nach dem ersten Ausführungsbeispiel,
- Fig. 3: eine Draufsicht auf das erfindungsgemäße Schachtkraftwerk nach dem ersten Ausführungsbeispiel,
- Fig. 4: eine Schnittansicht des erfindungsgemäßen Schachtkraftwerks nach einem zweiten Ausführungsbeispiel,
- Fig. 5: eine weitere Schnittansicht des erfindungsgemäßen Schachtkraftwerks nach dem zweiten Ausführungsbeispiel,
- Fig. 6: eine Draufsicht auf das erfindungsgemäße Schachtkraftwerk nach dem zweiten Ausführungsbeispiel,
- Fig. 7: eine Schnittansicht des erfindungsgemäßen Schachtkraftwerks nach einem dritten Ausführungsbeispiel,
- Fig. 8: eine weitere Schnittansicht des erfindungsgemäßen Schachtkraftwerks nach dem dritten Ausführungsbeispiel,
- Fig. 9: eine Draufsicht auf das erfindungsgemäße Schachtkraftwerk nach dem dritten Ausführungsbeispiel,
- Fig. 10: eine erste Variante einer Klappe für alle vier Ausführungsbeispiele, und
- Fig. 11, 12: eine zweite Variante der Klappe für alle vier Ausführungsbeispiele.

Im Folgenden werden drei Ausführungsbeispiele eines erfindungsgemäßen Schachtkraftwerks 1 im Detail erläutert.

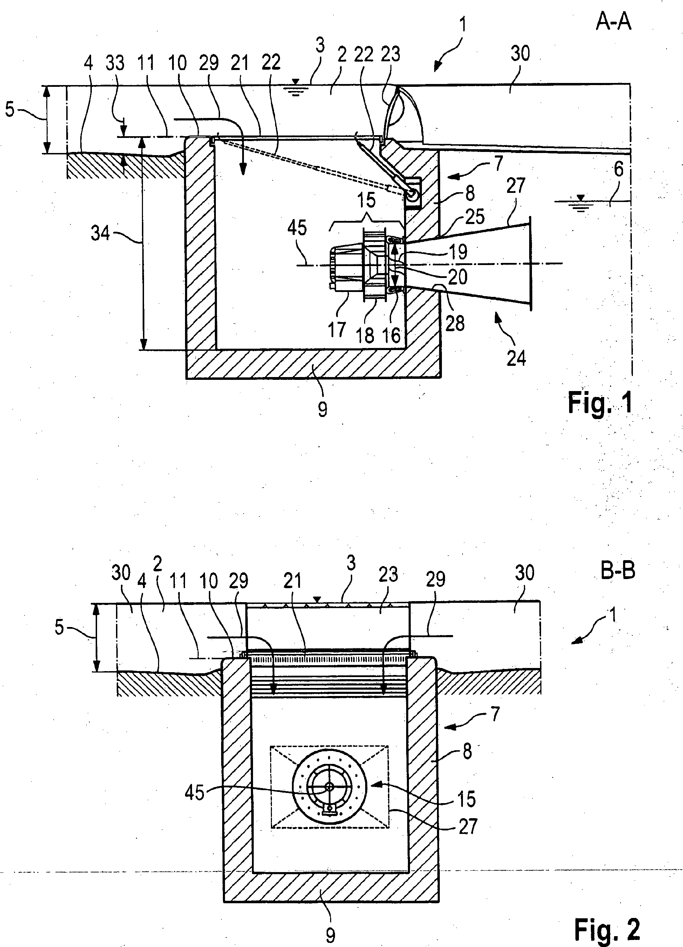

Die Fig. 1 bis 3 zeigen das erste Ausführungsbeispiel des Schachtkraftwerks 1. Dabei ist ein Oberwasser 2 mit Oberwasserstand 3 und Oberwassersohlebene 4 zu sehen. Zwischen dem Oberwasserstand 3 und Oberwassersohlebene 4 erstreckt sich eine Oberwassertiefe 5. Etwas tiefer als das Oberwasser 2 liegt ein Unterwasser 6. Das Schachtkraftwerk 1 nutzt die Fallhöhe zwischen dem Oberwasser 2 und dem Unterwasser 6 zur Erzeugung elektrischer Energie aus.

Hierzu umfasst das Schachtkraftwerk 1 einen vertikalen Schacht 7, bestehend aus vertikalen Seitenwänden 8 und einem Boden 9. Der Boden 9 des vertikalen Schachts 7 ist horizontal angeordnet. Von diesem Boden 9 erstrecken sich in vertikaler Richtung nach oben die Seitenwände 8. Die Seitenwände 8 schließen ebenbündig mit einer Schachtoberkante bzw. Schachtkrone 10 ab. Diese Schachtkrone 10 definiert eine horizontale Einlaufebene 11 des Schachtes 7. Eine lichte Schachttiefe 34 definiert sich von dieser horizontalen Einlaufebene 11 bis zur Oberkante des Bodens 9. Die horizontale Einlaufebene 11 befindet sich deutlich unterhalb des Oberwasserstandes 3 und um einen Überstand 33 höher als die Oberwassersohlebene 4.

Auf der Seitenwand 8 des Schachtes 7 befindet sich eine horizontal angeordnete Einheit, bestehend aus einer Turbine 16 mit einer Turbinenachse (45), einer elektrischen Maschine 17, ausgebildet als Generator, und einem Leitapparat 18. Die Turbine 16 ist hierbei mit der Seitenwand 8 fest verbunden. Neben der Turbine 16 befindet sich direkt der Leitapparat 18 und neben dem Leitapparat 18 befindet sich direkt die elektrische Maschine 17. Wesentlicher Bestandteil der Turbine 16 ist ein vertikal angeordnetes Turbinenlaufrad 19 mit einem Turbinenlaufraddurchmesser 20. Eine Rotationsachse (Turbinenachse 45) des Turbinenlaufrades 19 sowie eine Ankerachse der elektrischen Maschine sind koaxial zueinander und horizontal.

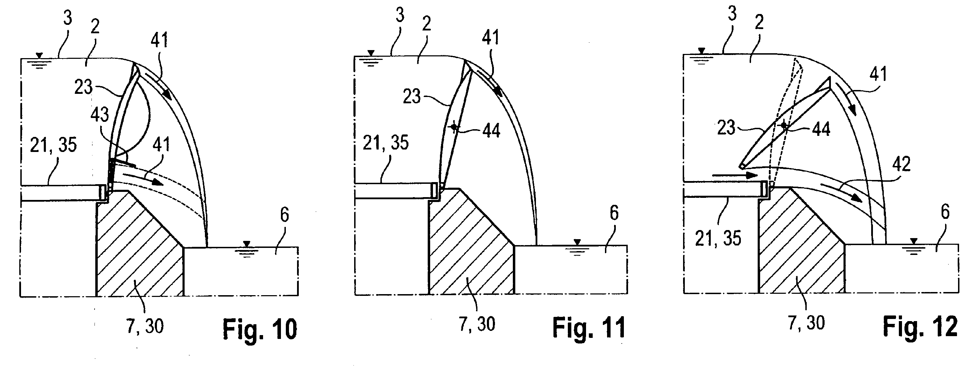

Die oben offene Seite des Schachtes 7 ist mit einem horizontal angeordneten Rechen 21 versehen. Dieser Rechen 21 befindet sich in der horizontalen Einlaufebene 11. Des Weiteren ist zur Reinigung des Rechens 21 eine Rechenreinigung 22 innerhalb des Schachtes unter Wasser angeordnet. In Verlängerung einer Seitenwand 8 des Schachtes 7 befindet sich eine Klappe 23, welche eine Verbindung zwischen Oberwasser 2 und Unterwasser 6 unter Umgehung des Schachtes 7 und insbesondere unter Umgehung der Einheit 15 ermöglicht. Die Klappe 23 wird im Detail in den Fig. 10 bis 12 beschrieben.

Die an der Seitenwand 8 befestigte Einheit 15 befindet sich direkt an einem kreisrunden Durchlass 28 in der Seitenwand 8. Dadurch kann die Einheit 15 über einen Strömungskanal bildenden Ablauf 24 mit dem Unterwasser 6 verbunden werden. Hierzu umfasst der Ablauf 24 einen Konus 25 an den sich ein Saugrohr bzw. Saugschlauch 27 anschließt. Der Konus 25 steckt im Durchlass 28 und ist dicht verbunden mit einem Auslass der Turbine 16. Über diesen Konus 25 läuft die Strömung direkt in den Saugschlauch 27.

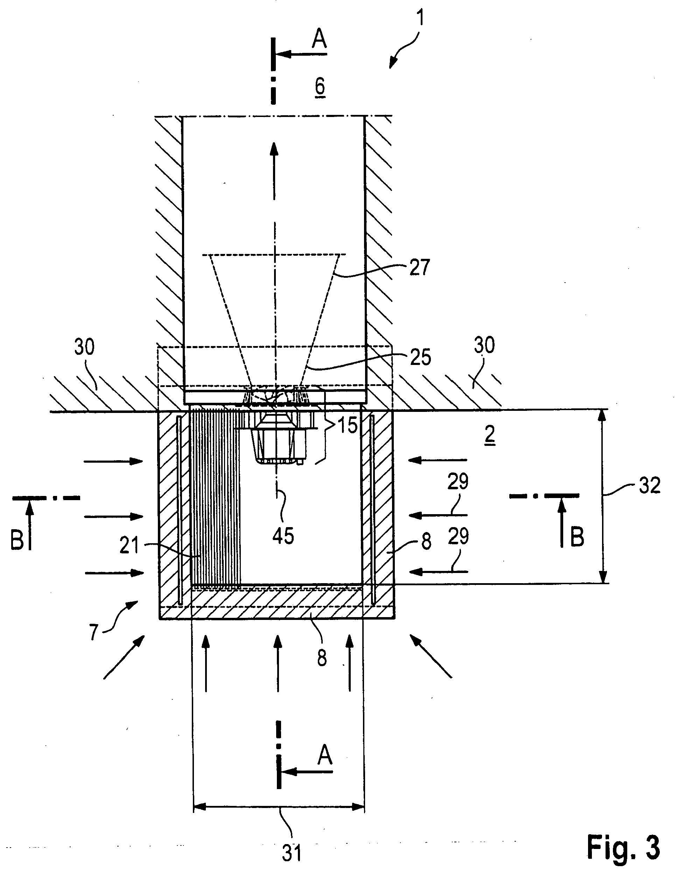

Die Fig. 2 und 3 zeigen ebenfalls das erste Ausführungsbeispiel. In der Draufsicht gemäß Fig. 3 ist ein Schnitt A eingezeichnet, wie ihn Fig. 1 zeigt, sowie ein Schnitt B gemäß Fig. 2. In den Fig. 2 und 3 ist gut zu sehen, dass der Schacht 7 mit einer vertikalen Seitenwand 8 direkt an einem Staubauwerk 30 angrenzt. Die Fig. 3 zeigt eine horizontale Querschnittsfläche des Schachtes 7 (erste Querschnittsfläche), welche sich durch eine erste lichte Seitenlänge 31 und eine zweite lichte Seitenlänge 32 des Schachtes 7 definiert. Die Querschnittsfläche des Schachtes 7 ist somit das Produkt aus erster Seitenlänge 31 und zweiter Seitenlänge 32.Abgesehen von einer kleinen Einschnürung des Schachtes 7 durch einen Absatz unterhalb einer Klappe 23 ist hier die erste Querschnittsfläche auf Höhe der Schachtkrone 10 und auf Höhe der Turbinenachse 45 gleich. Eine durch das Turbinenlaufrad 19 beanspruchte vertikale Querschnittsfläche (zweite Querschnittsfläche) berechnet sich durch den in Fig. 1 eingezeichneten Turbinenlaufraddurchmesser 20. Die durch das Turbinenlaufrad 19 eingenommene Querschnittsfläche innerhalb der Turbine 16 ist somit das Produkt aus dem halben Turbinenlaufraddurchmesser 20 im Quadrat und Pi. Entscheidend an vorliegender Erfindung ist nun, dass die Querschnittsfläche des Schachtes 7 wesentlich größer ist als die durch das Turbinenlaufrad 19 beanspruchte Querschnittsfläche. Dadurch ist die Fliessgeschwindigkeit des Wassers in der Rechenebene sehr gering und wird erst unmittelbar vor der Turbine 16 beschleunigt, wodurch einerseits die Schiebe- und Schwebegutbelastung des Schachtes 7 reduziert wird und zum anderen die Fische das Schachtkraftwerk 1 über die Klappe 23 ohne Turbinendurchgang passieren können.

Das Wasser fließt über die in den Fig. 1, 2 und 3 eingezeichnete Einlaufrichtung 29 von drei Seiten über die horizontale Einlaufebene 11 in den Schacht 7. Über den Leitapparat 18 wird das Wasser in horizontaler Richtung auf das Turbinenlaufrad 19 geleitet. Am Turbinenausgang fließt das Wasser über den Konus 25 und verlässt über den Saugschlauch 27 Wasser das Schachtkraftwerk 1 und fließt in das Unterwasser 6 ab. Die Rotationsbewegung im Turbinenlaufrad 19 wird über die elektrische Maschine 17 in elektrischen Strom gewandelt. Dabei sitzt die komplette Einheit 15 im Schacht 7 und somit komplett unter Wasser. Folglich ist keine weitere Kühlung der Einheit 15 nötig. Der erzeugte elektrische Strom wird über eine nicht dargestellte Kabelverbindung nach außen geführt.

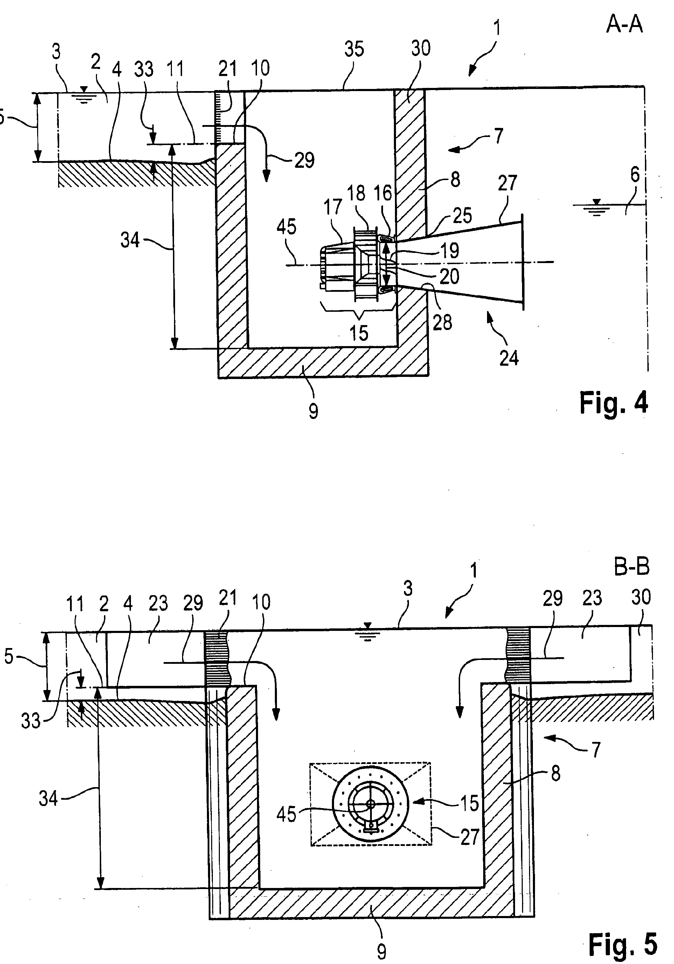

Die Fig. 4, 5, und 6 zeigen ein zweites Ausführungsbeispiel des Schachtkraftwerks 1. Gleiche bzw. funktional gleiche Bauteile sind im zweiten Ausführungsbeispiel mit dem gleichen Bezugszeichen wie im ersten Ausführungsbeispiel beschrieben.

Im Gegensatz zum ersten Ausführungsbeispiel zeigt das zweite Ausführungsbeispiel eine Variante mit halbrundem, vertikalem Schacht 7 sowie vertikal angeordnetem Rechen 21.

In den Fig. 4 und 5 ist gut zu sehen, dass hier der Rechen 21 vertikal als Verlängerung der halbrunden vertikalen Seitenwand 8 des Schachtes 7 vorgesehen ist. Dabei erstrecken sich die Rechen 21 von der Schachtkrone 10 bis zumindest an den Oberwasserstand 3. Aus Sicherheitsgründen ist der komplette Schacht 7 ungefähr auf Höhe des Oberwasserstandes 3 mit einer Abdeckung 35 verdeckt.

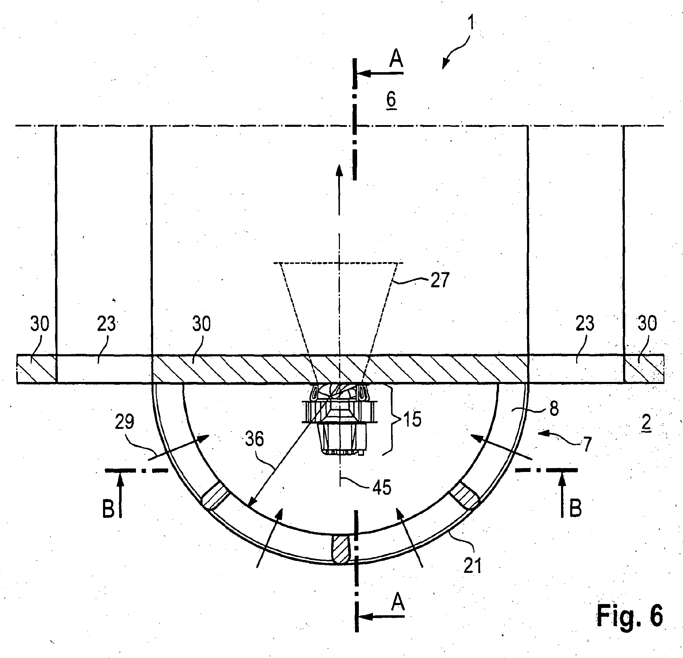

Die Fig. 6 zeigt die halbrunde Ausgestaltung des vertikalen Schachtes 7, wobei die gerade Seite des halbrunden Schachtes 7 mit dem Staubauwerk 30 vereint ist. Dies zeigt insbesondere Fig. 4, wonach die vertikale Seitenwand 8 exakt ab der horizontalen Einlaufebene 11 integral in das Staubauwerk 30 übergeht. Eine Querschnittsfläche (erste Querschnittsfläche) des Schachtes 7 definiert sich durch den Radius 36. Somit berechnet sich hier die Querschnittsfläche des Schachtes 7 zum Halben des Produktes aus Radius 36 im Quadrat und Pi.

Im zweiten Ausführungsbeispiel sind zwei Klappen 23 seitlich des Schachtes 7 vorgesehen. Das durch das Oberwasser 2 angetragene Geschiebe bleibt am Überstand 34 hängen und rutscht entlang dem Halbrund zu den Klappen 23. Dadurch wird vermieden, dass die Turbine 16 zu viel Geschiebe ansaugt.

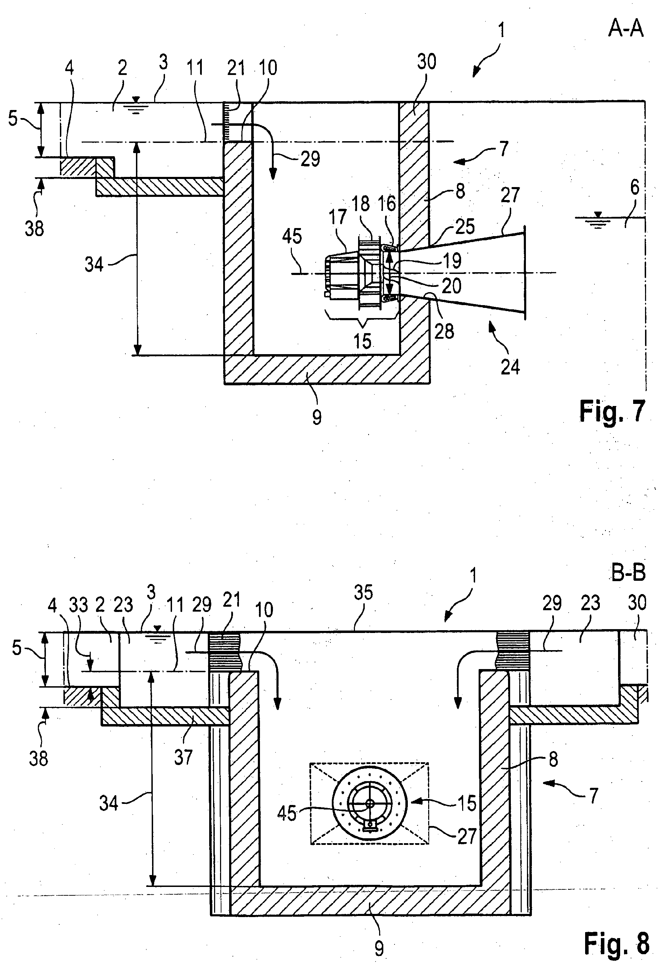

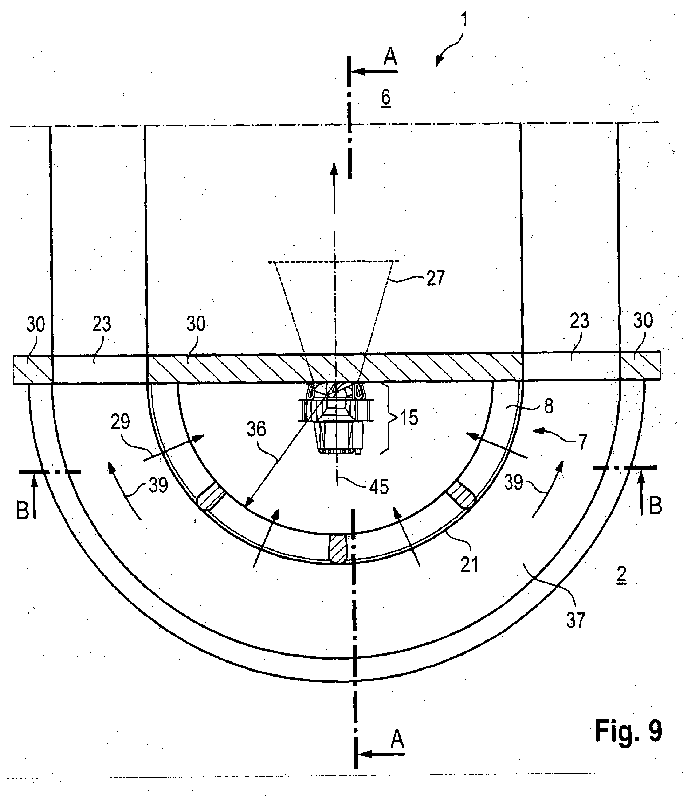

Die Fig. 7 bis 9 zeigen ein drittes Ausführungsbeispiel des Schachtkraftwerks. Gleiche bzw. funktional gleiche Bauteile sind im ersten, zweiten und dritten Ausführungsbeispiel mit den gleichen Bezugszeichen bezeichnet.

Das dritte Ausführungsbeispiel ist genauso wie das zweite Ausführungsbeispiel mit einem halbrunden vertikalen Schacht 7, zwei seitlichen Klappen 23 und vertikal stehenden Rechen 21 mit horizontalen Stäben ausgeführt.

Als zusätzliches Merkmal ist im dritten Ausführungsbeispiel außerhalb des Schachtes 7 bzw. außerhalb der vertikalen Schachtwände 8 entlang des gesamten Halbrundes ein Spülkanal bzw. eine Spülrinne 37 ausgebildet. Diese Spülrinne 37 führt von einer Klappe 23 um den Schacht 7 herum zur anderen Klappe 23. Dabei liegt der Spülkanal 37 um eine Spülkanaltiefe 38 unterhalb der Oberwassersohlebene 4. Zum Auffangen des Geschiebes dient somit im dritten Ausführungsbeispiel nicht mehr nur der Überstand 33, sondern auch die Spülkanaltiefe 38. Bei Öffnen der Klappen 23 beidseitig des Schachtes 7 entsteht ein Spülstrom 39 in der Spülrinne 37 hin zu beiden Klappen 23.

Es ist insbesondere darauf hinzuweisen, dass die verschiedenen Eigenschaften der drei Ausführungsbeispiele gemischt werden können. So ist in jedem der drei Ausführungsbeispiele sowohl eine horizontale als auch vertikale Rechenanordnung, eine runde oder vieleckige Schachtgeometrie, eine oder mehrere Klappen 23 und/oder eine Spülrinne 27 bevorzugt.

Im Folgenden werden anhand der Fig. 10, 11 und 12 zwei verschiedene Varianten der Klappe 23 vorgestellt. Für alle drei Ausführungsbeispiele sind jeweils beiden Klappenvarianten vorteilhaft anwendbar.

Fig. 10 zeigt eine erste Variante der Klappe 23. Wie in den verschiedenen Ausführungsbeispielen gezeigt wurde, kann die Klappe 23 entweder auf einer Seitenwand 8 des vertikalen Schachtes 7 oder im Staubauwerk 30 angeordnet sein. Die Klappe 23 ist in geschlossenem Zustand, wie Fig. 10 zeigt, etwas gegenüber dem Oberwasserstand 3 nach unten versetzt, so dass eine permanente Überströmung 41 entsteht. Des Weiteren ist die Klappe 23 in der ersten Variante drehbar, so dass die Überströmung 41 regelbar ist.

Im unteren Bereich der Klappe 23 sieht man, dass sich eine Unterkante der Klappe 23 in etwa auf Höhe des Rechens 21 bzw. der Abdeckung 35 befindet. Um zwischen der Klappe 23 und dem Schacht 7 bzw. dem Staubauwerk 30 eine Unterströmung 42 zu gewährleisten, ist hier ein integrierter Verschluss 43 vorgesehen. Dieser integrierte Verschluss 43 ist ein schwenkbarer Anteil im unteren Bereich der Klappe 23. Die Überströmung 41 genauso wie die Unterströmung 42 sind direkte Wasserverbindungen vom Oberwasser 2 zum Unterwasser 6 unter Umgehung des Schachtes 7 sowie unter Umgehung der stromerzeugenden Einheit 15.

Die Fig. 11 und 12 zeigen eine zweite Variante der Klappe 23. In Fig. 11 ist die Klappe 23 im geschlossenen Zustand gezeigt, wobei hier wiederum die Oberkante der Klappe 23 etwas nach unten versetzt ist gegenüber dem Oberwasserstand 3, so dass eine konstante Überströmung 41 entsteht. In dieser zweiten Variante ist kein integrierter Verschluss 43 vorgesehen. Anstatt dessen ist die Klappe 23 hier in ihrer Mitte um eine horizontale Achse 44 schwenkbar gelagert. Durch Ausschwenken der Klappe 23 wird gleichzeitig der Volumenstrom in der Überströmung 41 und in der Unterströmung 42 erhöht.

Durch die konstante Überströmung 41 wird eine Wirbelbildung oberhalb des Schachtes 7 vermieden. Somit kann Treibgut stets unter Umgehung der stromerzeugenden Einheit 15 auf der Wasseroberfläche vom Oberwasser 2 zum Unterwasser 6 gespült werden. Durch die zeit- oder bedarfsgesteuerte Unterströmung 22 wird zum einen angetragenes Geschiebe, welches sich am Überstand 33 oder in der Spülrinne 37 angesammelt hat, unter Umgehung der stromerzeugenden Einheit 15 direkt aus dem Oberwasser 2 in das Unterwasser 6 entfernt. Zum Zweiten dient die Unterströmung 42 als Aaldurchlass bzw. dem Abstieg bodennah schwimmender Fische.

Erfindungsgemäß fließt in allen Ausführungsbeispielen die Strömung immer von oben nach unten durch den Schacht ein und verlässt horizontal durch die Einheit 15 den Schacht. Die Eintrittsebene zum Schacht ist immer unter Wasser und es sollte eine Mindestüberdeckung gewährleistet sein, damit keine lufteinziehenden Wirbel auftreten. Die Ausführungsbeispiele kommen bevorzugt an verlandeten Querbauwerken zum Einsatz. Diese sind nicht nur durch eine Spiegeldifferenz (Ober-/Unterwasser) gekennzeichnet, sondern auch dadurch, dass starker Geschiebetrieb bei Hochwasser stattfindet. Ferner treten hier bei geringer Fließtiefe und hohen Abflüssen hohe Geschwindigkeiten auf, die in der Rechenebene vor der Turbine auf unter 1 m/s verlangsamt werden müssen. Bei konventionellen Anlagen kann dies nur durch eine Tieferlegung des annähernd vertikalen Einlaufs zu den Turbinen erfolgen. Solche Anordnungen sind jedoch im Betrieb problematisch, da es zu Geschiebeablagerungen im Zulauf zu den Turbinen und damit zu Wirkungsgradeinschränkungen und Betriebsstörungen kommt. Im Gegensatz dazu bietet die vorgestellte Erfindung die Möglichkeit, den Schachtquerschnitt beliebig in einer 2D Horizontalebene zu vergrößern und damit die Geschwindigkeiten problemlos auf 0,5 m/s oder geringer abzusenken. Die Größe des Schacht-Querschnitts wird damit zu einer zusätzlichen Stellgröße, die z.B. in Bezug auf Fischfreundlichkeit problemlos optimiert werden kann.

Das vorgeschlagene Konzept enthält betriebsfreundliche und nachhaltige Lösungen für die Geschiebeproblematik. Ferner kann Hochwasser problemlos abgeführt werden. Bevorzugt wird der Flusslauf in seiner gesamten Breite überströmt, d.h. der Kraftwerksbau hat keine Kapazitätseinbuße und aufgrund der Unterwasseranordnung keine Wasserschäden zur Folge. Ferner können bestehende, auch historische, Wehre genutzt werden, die aus wirtschaftlichen und Denkmalschutzgründen möglichst wenig modifiziert werden sollten. Bei konventionellen Buchtenkraftwerken muss das Wasser vom Flusslauf ausgeleitet und wieder zurückgeführt werden. Dies bedingt hohe Eingriffe, hohe Kosten, Schwierigkeiten im Betrieb und das Krafthaus ist sichtbar und akustisch wahrnehmbar. Vorgeschlagene Erfindung ändert am Abflussweg des bestehenden Flusslaufs nur wenig.

## Patentansprüche

1. Schachtkraftwerk (1) zur Stromerzeugung durch Energieumwandlung eines Abflusses zwischen Oberwasser (2) und Unterwasser (6), umfassend
- einen vertikalen Schacht (7), dessen Schachtkrone (10) eine sohlparallele Einlaufebene (11) bildet, welche unterhalb des Wasserstandes (3) des Oberwassers verläuft, wobei der Schacht (7) nach oben offen ist und an seinem unteren Ende mit einem Boden (9) verschlossen ist,
- eine Einheit (15) aus einer Turbine (16) und einer elektrischen Maschine (17), wobei die Einheit (15) komplett unter Wasser im Schacht (7) angeordnet ist, und wobei die Turbine (16) zum horizontalen Wasserdurchlauf angeordnet ist,
- einen an die Turbine (16) angeschlossenen Ablauf (24), welcher einen geschlossenen Strömungskanal darstellt und durch einen Durchlass (28) im Schacht (7) zum Unterwasser (6) führt, und
- ein Staubauwerk (30) zwischen Oberwasser (2) und Unterwasser (6),
- wobei eine horizontale erste Querschnittsfläche des Schachts (7) wesentlich größer ist als eine durch das Turbinenlaufrad (19) beanspruchte, vertikale zweite Querschnittsfläche,
- **dadurch gekennzeichnet, dass** in dem Staubauwerk (30) oder auf einer Seitenwand (8) des vertikalen Schachtes (7) zumindest eine permanent überströmte Klappe (23) angeordnet ist.

2. Schachtkraftwerk nach Anspruch 1, **dadurch gekennzeichnet dass**, die erste Querschnittsfläche um zumindest Faktor 1,5, insbesondere 5, insbesondere 10, insbesondere 30 größer ist als die zweite Querschnittsfläche.

3. Schachtkraftwerk nach einem der vorhergehenden Ansprüche, **dadurch gekennzeichnet, dass** die erste Querschnittsfläche auf Höhe einer Turbinenachse (45) oder auf Höhe der Schachtkrone (10) definiert ist.

4. Schachtkraftwerk nach einem der vorhergehenden Ansprüche, **dadurch gekennzeichnet, dass** die Schachtkrone (10) in der unteren Hälfte, insbesondere im unteren Drittel, einer Wassertiete (5) des Oberwassers angeordnet ist.

5. Schachtkraftwerk nach einem der vorhergehenden Ansprüche, **dadurch gekennzeichnet, dass** der Schacht (7) mit einem vieleckförmigen oder halbkreisförmigen Querschnitt ausgebildet ist, wobei eine Längsseite des Schachts (7) direkt am Staubauwerk (30) anliegt.

6. Schachtkraftwerk nach einem der vorhergehenden Ansprüche, **dadurch gekennzeichnet, dass** die Klappe (23) zum Erweitern der Überströmung (41) und zum Öffnen einer Unterströmung (42) ausgebildet ist.

7. Schachtkraftwerk nach einem der vorhergehenden Ansprüche, **dadurch gekennzeichnet, dass** an einer Unterkante der Klappe (23) ein integrierter Verschluss (43) zur Regulierung der Unterströmung (42) angeordnet ist.

8. Schachtkraftwerk nach einem der vorhergehenden Ansprüche, **dadurch gekennzeichnet, dass** der Boden (9) des Schachts (7) unterhalb der Sohlebene (4) des Oberwassers (2) angeordnet ist.

9. Schachtkraftwerk nach einem der vorhergehenden Ansprüche, **dadurch gekennzeichnet, dass**.der Ablauf (24) nach der Turbine (16) in folgender Reihenfolge einen sich aufweitenden Konus (25) und ein Saugrohr oder einen Saugschlauch (27) umfasst.

10. Schachtkraftwerk nach einem der vorhergehenden Ansprüche, **dadurch gekennzeichnet, dass** die Einheit (15) direkt an eine Seitenwand (8) des Schachts (7) montiert ist und sich der Ablauf (24) durch die Seitenwand (8) hindurch zum Unterwasser (6) erstreckt.

11. Schachtkraftwerk nach einem der vorhergehenden Ansprüche, **dadurch gekennzeichnet, dass** der Ablauf (24) seitlich des Turbinenlaufrads (19) angeordnet ist, so dass bei Stromerzeugung das Wasser das Turbinenlaufrad (19) horizontal durchströmt.

12. Schachtkraftwerk nach einem der vorhergehenden Ansprüche, **dadurch gekennzeichnet, dass** ein Einlauf (29) in den Schacht (7) mit einer horizontalen Rechenebene (21) versehen ist.

13. Schachtkraftwerk nach einem der vorhergehenden Ansprüche, **dadurch gekennzeichnet, dass** eine Unterkante der Klappe (23) auf Höhe der Schachtkrone (10), insbesondere auf Höhe der Rechenebene (21), angeordnet ist.

14. Schachkraftwerk nach einem der vorhergehenden Ansprüche, **dadurch gekennzeichnet, dass** die Klappe (23), betrachtet in Blickrichtung vom Oberwasser (2) zum Unterwasser (6), direkt hinter dem Schacht (7) angeordnet ist.

15. Schachtkraftwerksmodul zur Stromerzeugung durch Energieumwandlung eines Abflusses zwischen Oberwasser (2) und Unterwasser (6), umfassend
- ein vertikales Schachtmodul (7), dessen Schachtkrone (10) eine sohlparallele Einlaufebene (11) bildet, welche dazu ausgebildet ist, um unterhalb des Wasserstands (3) des Oberwassers zu verlaufen, wobei das Schachtmodul (7) nach oben offen ist und an seinem unteren Ende mit einem Boden (9) verschlossen ist,
- ein Einheitenmodul (15) aus einer Turbine (16) und einer elektrischen Maschine (17), wobei das Einheitenmodul (15) zur Anordnung komplett unter Wasser im Schachtmodul (7) ausgebildet ist, und wobei die Turbine (16) zur Anordnung mit horizontalem Wasserdurchlauf ausgebildet ist, und
- ein an die Turbine (16) anzuschließendes Ablaufmodul (24), welches einen geschlossenen Strömungskanal darstellt und dazu ausgebildet ist, um durch einen Durchlass (28) im Schachtmodul (7) zum Unterwasser (6) zu führen,
- wobei das Schachtkraftwerksmodul zum Anbau an ein Staubauwerk (30) zwischen Oberwasser (2) und Unterwasser (6) ausgebildet ist, und
- wobei eine horizontale erste Querschnittsfläche des Schachtmoduls (7) wesentlich größer ist als eine durch das Turbinenlaufrad (19) beanspruchte, vertikale zweite Querschnittsfläche,
- **dadurch gekennzeichnet, dass** in dem Staubauwerk (30) oder auf einer Seitenwand (8) des vertikalen Schachtes (7) zumindest eine permanent überströmte Klappe (23) angeordnet ist.

## Claims

1. Shaft power plant (1) for generating electricity by energy conversion of a discharge between a headwater (2) and a tailwater (6), comprising:
- a vertical shaft (7), the shaft top (10) of which forms an inflow plane (11) which is parallel to a bed and extends below the water level (3) of the headwater, wherein the shaft (7) is open towards the top and is closed at its bottom end by a base (9),
- a unit (15) consisting of a turbine (16) and an electrical machine (17), wherein the unit (15) is arranged entirely underwater in the shaft (7) and wherein the turbine (16) is arranged for water to pass through horizontally,
- an outflow (24) which is connected to the turbine (16), constitutes a closed flow channel and leads through a passage (28) in the shaft (7) to the tailwater (6), and
- a damming structure (30) between the headwater (2) and the tailwater (6),
- wherein a horizontal first cross-sectional area of the shaft (7) is substantially larger than a vertical second cross-sectional area taken up by the turbine runner (19),
- **characterised in that** at least one flap (23) which is permanently overflowed is arranged in the damming structure (30) or on a sidewall (8) of the vertical shaft (7).

2. Shaft power plant as claimed in claim 1, **characterised in that** the first cross-sectional area is at least 1.5 times, in particular 5 times, in particular 10 times, in particular 30 times larger than the second cross-sectional area.

3. Shaft power plant as claimed in any one of the preceding claims, **characterised in that** the first cross-sectional area is defined at a level of a turbine axis (45) or at a level of the shaft top (10).

4. Shaft power plant as claimed in any one of the preceding claims, **characterised in that** the shaft top (10) is arranged in the bottom half, in particular in the bottom third, of a water depth (5) of the headwater.

5. Shaft power plant as claimed in any one of the preceding claims, **characterised in that** the shaft (7) is configured with a polygonal or semicircular cross-section, wherein one longitudinal side of the shaft (7) abuts directly against the damming structure (30).

6. Shaft power plant as claimed in any one of the preceding claims, **characterised in that** the flap (23) is configured to enlarge the overflow (41) and to open an underflow (42).

7. Shaft power plant as claimed in any one of the preceding claims, **characterised in that** an integrated closure (43) for regulating the underflow (42) is arranged on a bottom edge of the flap (23).

8. Shaft power plant as claimed in any one of the preceding claims, **characterised in that** the base (9) of the shaft (7) is arranged below the bed plane (4) of the headwater (2).

9. Shaft power plant as claimed in any one of the preceding claims, **characterised in that** the outflow (24) comprises, in the following sequence downstream of the turbine (16), a flaring cone (25) and a suction pipe or a suction hose (27).

10. Shaft power plant as claimed in any one of the preceding claims, **characterised in that** the unit (15) is mounted directly on a sidewall (8) of the shaft (7) and the outflow (24) extends through the sidewall (8) to the tailwater (6).

11. Shaft power plant as claimed in any one of the preceding claims, **characterised in that** the outflow (24) is arranged to a side of the turbine runner (19), so that during electricity generation, the water flows horizontally through the turbine runner (19).

12. Shaft power plant as claimed in any one of the preceding claims, **characterised in that** an inflow (29) into the shaft (7) is provided with a horizontal screen plane (21).

13. Shaft power plant as claimed in any one of the preceding claims, **characterised in that** a bottom edge of the flap (23) is arranged at a level of the shaft top (10), in particular at a level of the screen plane (21).

14. Shaft power plant as claimed in any one of the preceding claims, **characterised in that** the flap (23), as seen in a viewing direction from the headwater (2) to the tailwater (6), is arranged directly behind the shaft (7).

15. Shaft power plant module for generating electricity by energy conversion of a discharge between a headwater (2) and a tailwater (6), comprising:
- a vertical shaft module (7), the shaft top (10) of which forms an inflow plane (11) which is parallel to a bed and which is configured to extend below the water level (3) of the headwater, wherein the shaft module (7) is open towards the top and is closed at its bottom end by a base (9),
- a unit module (15) consisting of a turbine (16) and an electrical machine (17), wherein the unit module (15) is configured to be arranged entirely underwater in the shaft module (7) and wherein the turbine (16) is configured to be arranged for water to pass through horizontally, and
- an outflow module (24) which is to be connected to the turbine (16), constitutes a closed flow channel and is configured to lead through a passage (28) in the shaft module (7) to the tailwater (6),
- wherein the shaft power plant module is configured for attachment to a damming structure (30) between the headwater (2) and the tailwater (6), and
- wherein a horizontal first cross-sectional area of the shaft module (7) is substantially larger than a vertical second cross-sectional area taken up by the turbine runner (19),
- **characterised in that** at least one flap (23) which is permanently overflowed is arranged in the damming structure (30) or on a sidewall (8) of the vertical shaft (7).

## Revendications

1. Centrale électrique à puits (1) servant à produire du courant par la transformation d'énergie d'un écoulement entre les eaux d'amont (2) et les eaux d'aval (6), comprenant
- un puits (7) vertical, dont la couronne de puits (10) forme un plan de prise d'eau (11) parallèle au lit, lequel s'étend sous le niveau d'eau (3) des eaux d'amont, dans laquelle le puits (7) est ouvert vers le haut et est fermé, au niveau de son extrémité inférieure, par un fond (9),
- une unité (15) composée d'une turbine (16) et d'un moteur (17) électrique, dans laquelle l'unité (15) est disposée totalement sous l'eau dans le puits (7) et dans laquelle la turbine (16) est disposée par rapport au passage d'eau horizontal,
- une sortie (24) raccordée à la turbine (16), laquelle constitue un canal d'écoulement fermé et mène à travers un passage (28) dans le puits (7) en direction des eaux d'aval (6), et
- un barrage (30) entre les eaux d'amont (2) et les eaux d'aval (6),
- dans laquelle une première face horizontale de section transversale du puits (7) est sensiblement plus grande qu'une deuxième face verticale de section transversale sollicitée par l'aube de turbine (19),
- **caractérisée en ce qu'**au moins un clapet (23) traversé en permanence par un flux supérieur est disposé dans le barrage (30) ou sur une paroi latérale (8) du puits (7) vertical.

2. Centrale électrique à puits selon la revendication 1, **caractérisée en ce que** la première face de section transversale est plus grande que la deuxième face de section transversale d'au moins un facteur de 1,5, en particulier de 5, en particulier de 10, en particulier de 30.

3. Centrale électrique à puits selon l'une quelconque des revendications précédentes, **caractérisée en ce que** la première face de section transversale est définie à hauteur d'un axe de turbine (45) ou à hauteur de la couronne de puits (10).

4. Centrale électrique à puits selon l'une quelconque des revendications précédentes, **caractérisée en ce que** la couronne de puits (10) est disposée dans la moitié inférieure, en particulier dans le tiers inférieur, d'une profondeur d'eau (5) des eaux d'amont.

5. Centrale électrique à puits selon l'une quelconque des revendications précédentes, **caractérisée en ce que** le puits (7) est réalisé avec une section transversale présentant une forme polygonale ou une forme semi-circulaire, dans laquelle un côté longitudinal du puits (7) repose directement au niveau du barrage (30).

6. Centrale électrique à puits selon l'une quelconque des revendications précédentes, **caractérisée en ce que** le clapet (23) est réalisé afin d'élargir le flux supérieur (41) et afin d'ouvrir le flux inférieur (42).

7. Centrale électrique à puits selon l'une quelconque des revendications précédentes, **caractérisée en ce qu'**un système de fermeture (43) intégré servant à réguler le flux inférieur (42) est disposé au niveau d'une arête inférieure du clapet (23).

8. Centrale électrique à puits selon l'une quelconque des revendications précédentes, **caractérisée en ce que** le fond (9) du puits (7) est disposé sous le plan du lit (4) des eaux d'amont (2).

9. Centrale électrique à puits selon l'une quelconque des revendications précédentes, **caractérisée en ce que** la sortie (24) après la turbine (16) comprend, dans l'ordre qui suit, un cône (25) s'élargissant et un tuyau d'aspiration ou un tuyau flexible d'aspiration (27).

10. Centrale électrique à puits selon l'une quelconque des revendications précédentes, **caractérisée en ce que** l'unité (15) est montée directement au niveau d'une paroi latérale (8) du puits (7), et **en ce que** la sortie (24) s'étend à travers la paroi latérale (8) en direction des eaux d'aval (6).

11. Centrale électrique à puits selon l'une quelconque des revendications précédentes, **caractérisée en ce que** la sortie (24) est disposée à côté de l'aube de turbine (19) de sorte que lors de la production de courant, l'eau traverse de manière horizontale l'aube de turbine (19).

12. Centrale électrique à puits selon l'une quelconque des revendications précédentes, **caractérisée en ce qu'**une entrée (29) dans le puits (7) est pourvue d'un plan de grillage (21) horizontal.

13. Centrale électrique à puits selon l'une quelconque des revendications précédentes, **caractérisée en ce qu'**une arête inférieure du clapet (23) est disposée à hauteur de la couronne de puits (10), en particulier à hauteur du plan de grillage (21).

14. Centrale électrique à puits selon l'une quelconque des revendications précédentes, **caractérisée en ce que** le clapet (23), selon une observation dans le sens allant des eaux d'amont (2) en direction des eaux d'aval (6), est disposé directement derrière le puits (7).

15. Module de centrale électrique à puits servant à produire du courant par transformation d'énergie d'un flux entre des eaux d'amont (2) et des eaux d'aval (6), comprenant
- un module de puits (7) vertical, dont la couronne de puits (10) forme un plan de prise d'eau (11) parallèle au lit, laquelle est configurée afin de s'étendre sous le niveau d'eau (3) des eaux d'amont, dans lequel le module de puits (7) est ouvert vers le haut et est fermé, au niveau de son extrémité inférieure, par un fond (9),
- un module d'unité (15) composé d'une turbine (16) et d'un moteur (17) électrique, dans lequel le module d'unité (15) est réalisé afin d'être disposé totalement sous l'eau dans le module de puits (7) et dans lequel la turbine (16) est réalisée afin d'être disposée à l'aide d'un passage d'eau horizontal, et
- un module de sortie (24) à raccorder à la turbine (16), lequel constitue un canal d'écoulement fermé et est configuré afin de mener à travers un passage (28) dans le module de puits (7) en direction des eaux d'aval (6),
- dans lequel le module de centrale électrique à puits est réalisé afin d'être installé au niveau d'un barrage (30) entre les eaux d'amont (2) et les eaux d'aval (6), et
- dans lequel une première face horizontale de section transversale du module de puits (7) est sensiblement plus grande qu'une deuxième face verticale de section transversale sollicitée par l'aube de turbine (19),
- **caractérisé en ce qu'**au moins un clapet (23) traversé en permanence par un flux supérieur est disposé dans le barrage (30) ou sur une paroi latérale (8) du puits (7) vertical.
